# FASCICULE DE BREVET EUROPEEN

(11) **EP 3 957 027 B1**
(45) Date de publication et mention de la délivrance du brevet: **07.06.2023**
(21) Numéro de dépôt: 20718126.4
(22) Date de dépôt: 02.04.2020
(51) Int. Cl.: H04W 4/029, H04W 24/02, H04L 41/147, H04L 43/0811, H04W 4/02

(54) **PROCÉDÉ ET DISPOSITIF DE PRÉDICTION D'UNE QUALITÉ DE CONNEXION À UN RÉSEAU CELLULAIRE**
VERFAHREN UND VORRICHTUNG ZUR VORHERSAGE EINER VERBINDUNGSQUALITÄT ZU EINEM ZELLULAREN NETZWERK
METHOD AND DEVICE FOR PREDICTING A CONNECTION QUALITY TO A CELLULAR NETWORK

(30) Priorité: 15.04.2019 FR 1903993
(43) Date de publication de la demande: 23.02.2022
(73) Titulaire: Continental Automotive Technologies GmbH, 30165 Hannover (DE)
(72) Inventeur: PIRIOU, Simon, 31100 Toulouse (FR); VIAL, Grégory, 31100 Toulouse (FR)
(74) Mandataire: Kaabouni, Fatima
(86) Numéro de dépôt international: PCT/EP2020/059428
(87) Numéro de publication internationale: WO 2020/212156

(56) Documents cités:
- US-A1- 2015 120 087
- US-A1- 2019 036 630
- US-B2- 9 998 927

## Description

### Domaine technique

L'invention concerne un dispositif et un procédé de prédiction d'une qualité de connexion à un réseau cellulaire sur un réseau routier.

### Technique antérieure

La disponibilité d'une connexion à un réseau de communication est une problématique croissante dans le domaine des transports. En particulier, les véhicules connectés nécessitent qu'une connexion soit disponible pour transmettre ou recevoir des données, comme par exemple des cartes routières, des informations sur le trafic ou encore des prévisions météo locales.

Or, malgré les efforts des opérateurs de télécommunication, certaines parties du territoire ne sont pas couvertes par un réseau de télécommunication sans fil, ou ne permettent qu'une connectivité limitée.

Différentes solutions techniques ont été proposées pour identifier les zones de connectivité limitée.

Une première solution consiste à produire des cartes de couverture réseau basées sur des simulations calculées à partir de l'emplacement géographique des antennes relais et du relief. De telles cartes, même si elles peuvent parfois mettre en évidences certaines « zones blanches » restent toutefois trop imprécises pour des usages dans des véhicules connectés.

Une autre solution est basée sur une approche participative. Selon une telle approche, des véhicules « volontaires » effectuent des mesures de puissance de signal au cours de trajets sur le réseau routier. Il est ainsi possible de compléter les cartes simulées à partir de données réellement observées. Malheureusement, les véhicules « volontaires » sont peu nombreux et une grande partie du réseau routier ne bénéficie pas de ces mesures.

Il existe donc un besoin pour un procédé permettant d'obtenir un indice représentatif d'une qualité de connexion à un réseau mobile, pour des segments routiers pour lesquels aucune mesure n'est disponible, qui ne présente pas les inconvénients précités.

### Résumé de l'invention

Compte tenu de ce qui précède, un but de l'invention est de fournir un procédé de prédiction d'une valeur représentative d'une qualité de connexion d'un véhicule à un réseau cellulaire depuis une localisation cible sur un réseau routier, le procédé comprenant les caractéristiques de la revendication 1. Des réalisations avantageuses sont exposées dans les revendications dépendantes .

Contrairement aux techniques de l'art antérieur qui fournissent généralement un indice de couverture réseau pour une localisation donnée, c'est-à-dire une puissance de signal à un emplacement donné, le procédé permet d'obtenir directement une qualité de connexion depuis un emplacement donné, sans qu'il soit nécessaire de mettre en oeuvre une simulation couteuse et imprécise de la couverture de chaque point d'accès.

On note que la première caractéristique de propagation du signal et la seconde caractéristique de propagation du signal sont de même nature et sont établies selon une technique analogue. Ainsi, si la première caractéristique utilisée pour entrainer le modèle comprend des valeurs [a, b, c], la seconde caractéristique à laquelle le modèle est appliqué comprend des valeurs [a', b', c'], les valeurs [a, b, c] et [a', b', c'] étant respectivement de même nature.

Selon un mode particulier de réalisation, une caractéristique de propagation d'un signal radio entre une localisation donnée et un point d'accès identifié est déterminée selon une caractéristique d'au moins un élément topographique dans l'environnement du point d'accès. Ainsi, le procédé prend en compte la présence et/ou la nature d'un élément topographique pour caractériser la propagation du signal radio. Les éléments topographiques tels que les bâtiments ou les reliefs influencent la propagation des ondes radioélectriques. En prenant en compte un tel élément topographique, le modèle de prédiction peut établir de meilleures corrélations entre des données d'entrainement et une localisation depuis laquelle prédire une qualité de connexion. Le procédé permet ainsi d'obtenir une prédiction plus fiable.

Selon une réalisation particulière, le procédé est tel qu'une caractéristique de propagation d'un signal radio entre une localisation donnée et un point d'accès identifié est un vecteur de caractéristiques comprenant au moins :
- Une longueur d'un trajet rectiligne de propagation d'un signal depuis le point d'accès identifié jusqu'à la localisation donnée, le signal étant transmis au travers d'un premier élément topographique, et
- Au moins une caractéristique du premier élément topographique.

La caractéristique de propagation déterminée pour l'entrainement du modèle et la prédiction de la qualité de connexion depuis un second emplacement comprend la distance en ligne directe entre le point d'accès et la localisation pour lesquels la caractéristique de propagation est déterminée, ainsi qu'une caractéristique d'un bâtiment au travers duquel le signal radio est transmis. En effet, la distance entre le point d'accès et le véhicule ainsi que la configuration topographique de l'environnement du point d'accès est déterminante pour la propagation du signal radio. Une telle caractéristique permet une meilleure corrélation entre les données d'entrainement et les l'environnement pour lequel une prédiction est souhaitée. L'efficacité du modèle de prédiction est ainsi renforcée.

La caractéristique du premier élément topographique correspond, selon un mode de réalisation particulier, à une distance de propagation du signal au travers de l'élément topographique. Dans le cas d'un bâtiment, il s'agit par exemple d'une dimension du bâtiment selon laquelle le signal est propagé. La présence d'un bâtiment ou d'un relief sur le chemin en ligne directe d'un signal radioélectrique a pour conséquence connue une atténuation du signal. Ainsi, la prise en compte d'une dimension d'un élément topographique susceptible d'affecter la propagation du signal, tel qu'un bâtiment ou un relief au travers duquel un signal est transmis, permet d'améliorer encore l'efficacité du modèle de prédiction. De façon avantageuse, afin d'améliorer encore les corrélations réalisées par le modèle entre les données d'entrainement et l'environnement de prédiction, le vecteur de caractéristiques comprend également une valeur représentative de la nature physique (bâtiment, relief, matériau, etc.) d'un tel élément topographique.

Un vecteur de caractéristiques correspond à un ensemble ordonné de nombres réels soumis en entrée du modèle. Selon l'invention, un tel vecteur comprend une pluralité de valeurs représentatives d'un contexte de propagation d'un signal radioélectrique entre un point d'accès et une localisation particulière.

Selon un mode particulier de réalisation, le procédé est tel que le vecteur de caractéristiques déterminé pour une localisation donnée et un point d'accès identifié comprend :
- Une longueur d'un trajet de propagation réfléchi d'un signal depuis le point d'accès jusqu'à la localisation donnée, le signal étant réfléchi sur un second élément topographique, et
- Un angle de réflexion du signal sur le second élément topographique.

La caractéristique de propagation comprend des éléments supplémentaires qui permettent de caractériser davantage la propagation du signal entre un point d'accès et une localisation géographique. En particulier, la caractéristique de propagation comprend une seconde distance correspondant à la longueur d'un trajet du signal radioélectrique lorsqu'il est réfléchi contre un second élément topographique dans l'environnement du point d'accès, ainsi qu'un angle de réflexion du signal contre cet élément topographique. Le vecteur de caractéristiques déterminé est ainsi particulièrement représentatif des conditions de propagation d'un signal entre un point d'accès et une localisation, permettant ainsi une prédiction d'autant plus pertinente.

De façon avantageuse, le vecteur de caractéristiques déterminé pour l'entrainement et la prédiction comprend en outre une donnée représentative de la nature physique du second élément topographique. La nature d'un élément topographique sur lequel est réfléchi un signal radioélectrique a une incidence sur la qualité de réception depuis un emplacement donné, car la puissance du signal réfléchi vers une localisation particulière dépend de la nature de l'obstacle. En prenant en compte la nature de l'obstacle pour entrainer et appliquer le modèle, les prédictions sont améliorées.

Selon un mode particulier de réalisation, le procédé est tel que le vecteur de caractéristiques déterminé pour une localisation donnée et un point d'accès identifié comprend en outre une configuration radio du point d'accès.

De manière connue, la configuration radio d'un point d'accès couvrant un emplacement particulier a une influence sur la façon dont se propage un signal entre ce point d'accès et l'emplacement particulier. Par exemple les fréquences dites basses ont par des propriétés de propagation bien meilleures en termes de portée et de pénétration dans les bâtiments que les fréquences hautes. Ainsi, en proposant d'inclure cette caractéristique dans le vecteur de caractéristiques utilisé pour l'entrainement et l'application du modèle, le procédé améliore encore la qualité des prédictions en permettant au modèle d'inférer de manière particulièrement pertinente des conditions de connexion depuis un second emplacement géographique à partir de conditions de connexion observées depuis un premier emplacement géographique.

Selon une réalisation particulière, le dispositif est tel que le vecteur de caractéristiques déterminé pour une localisation donnée et un point d'accès identifié comprend en outre une valeur représentative de l'humidité dans l'air.

Le taux d'humidité dans l'air influence la propagation des signaux radioélectriques dans l'air. Ainsi, en prenant en compte une valeur représentative de l'humidité dans l'air, le procédé permet des prédictions de qualité de connexion plus précises.

Selon un mode particulier de réalisation, le procédé est tel que le modèle de prédiction est un réseau de neurones de type perceptron multicouches.

Le problème de la détermination d'une qualité de connexion à un point d'accès particulier depuis un emplacement particulier n'est pas linéaire, car des obstacles interdisent généralement une propagation directe du signal radioélectrique. Un réseau de neurones de type perceptron multicouches (MLP) est particulièrement adapté à la résolution de problèmes non-linéaires et présente l'avantage d'être facile et rapide à entrainer.

Selon un autre aspect, l'invention concerne un dispositif de prédiction d'une valeur représentative d'une qualité de connexion d'un véhicule à un réseau cellulaire depuis une localisation cible, le dispositif comprenant les caractéristiques de la revendication 6 . Des réalisations avantageuses sont exposées dans les revendications dépendantes .

Dans un mode de réalisation particulier, le dispositif de prédiction est tel que la caractéristique de propagation d'un signal radio entre une localisation donnée et un point d'accès identifié déterminée par le module d'extraction de caractéristiques est un vecteur de caractéristiques comprenant au moins :
- Une longueur d'un trajet rectiligne de propagation d'un signal depuis le point d'accès identifié jusqu'à la localisation donnée, le signal étant transmis au travers d'un premier élément topographique, et
- Au moins une caractéristique du premier élément topographique,
- Une longueur d'un trajet de propagation réfléchi d'un signal depuis le point d'accès identifié jusqu'à la localisation donnée, le signal étant réfléchi sur un second élément topographique, et
- Un angle de réflexion du signal sur le second élément topographique.

L'invention vise aussi un serveur comprenant un dispositif de prédiction d'une qualité de connexion tel que décrit précédemment.

Selon encore un autre aspect, l'invention concerne un support d'information comportant des instructions de programme d'ordinateur configurées pour mettre en oeuvre les étapes d'un procédé de prédiction tel que décrit précédemment, lorsque les instructions sont exécutées par un processeur.

Le support d'information peut être un support d'information non transitoire tel qu'un disque dur, une mémoire flash, ou un disque optique par exemple.

Le support d'informations peut être n'importe quelle entité ou dispositif capable de stocker des instructions. Par exemple, le support peut comporter un moyen de stockage, tel qu'une ROM, RAM, PROM, EPROM, un CD ROM ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques, détails et avantages de l'invention apparaîtront à la lecture de la description détaillée ci-après, et à l'analyse des dessins annexés, sur lesquels :
[Fig. 1] La figure 1 représente un exemple d'environnement adapté pour mettre en oeuvre le procédé de prédiction selon un mode particulier de réalisation,
[Fig. 2] La figure 2 est un logigramme illustrant les principales étapes du procédé de prédiction selon une réalisation particulière,
[Fig. 3] La figure 3 représente l'architecture d'un dispositif de prédiction selon un mode de réalisation particulier.

### Description d'un mode de réalisation particulier

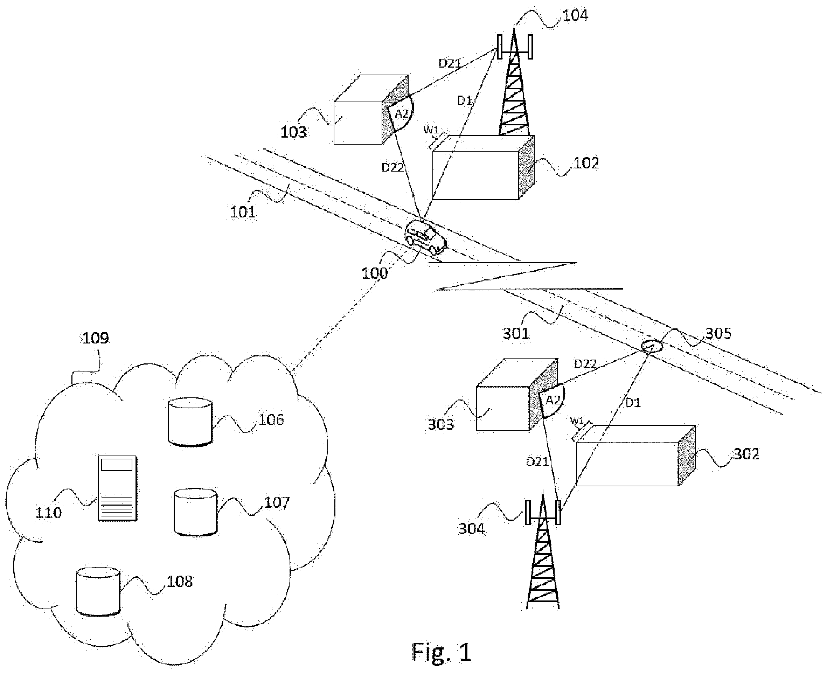

La figure 1 montre un véhicule 100 se déplaçant sur une voie de circulation 101. Le véhicule 100 est par exemple un véhicule connecté comprenant d'une interface de communication sans fil, par exemple une interface GPRS, EDGE, UMTS, 3G, 4G, WIFI, WIMAX, etc. lui permettant de se connecter à un réseau de communication 109 par l'intermédiaire d'un réseau d'accès sans fil pour échanger des messages avec au moins un dispositif connecté au réseau 109.

Les abords de la voie de circulation comprennent une antenne relai 104 d'un réseau de communication cellulaire et des éléments topographiques 102 et 103, par exemple des bâtiments. L'antenne relai 104 comprend un point d'accès cellulaire conforme à un standard tel que GPRS, EDGE, UMTS, 3G, 4G, WIFI, WIMAX et permet au véhicule connecté 100 d'échanger des messages avec le réseau de télécommunications 109.

La figure 1 montre aussi une seconde voie de circulation 301 dans l'environnement de laquelle se trouve une antenne relai 304 et des bâtiments 302 et 303.

La figure 1 montre encore un serveur 110 connecté au réseau 109. Le serveur 110 est configuré pour mettre en oeuvre le procédé de prédiction selon l'invention. Pour cela, le serveur 110 comprend au moins un calculateur, par exemple un processeur, un microprocesseur, un microcontrôleur, etc., et une mémoire, stockant des instructions de code exécutables par le calculateur pour mettre en oeuvre le procédé de prédiction selon un mode de réalisation particulier.

Le serveur 110 comprend en outre une interface de communication lui permettant de se connecter au réseau de télécommunication 109 et d'échanger des messages avec d'autres dispositifs conformément à un protocole de communication. L'interface réseau est par exemple une interface Ethernet permettant d'échanger des messages conformes au protocole TCP/IP avec des serveurs de base de données 106,107 et 108, et avec le véhicule 100, par l'intermédiaire d'un réseau d'accès cellulaire.

Le serveur 110 comprend également un modèle de prédiction de type réseau de neurones perceptron multicouche (MLP, pour multi-layer perceptron en anglais).

La base de données 106 comprend des enregistrements relatifs à des antennes relais ou des points d'accès sans fil implantés sur un territoire. Pour un point d'accès donné, un enregistrement de la base de données 106 comprend au moins un identifiant d'un point d'accès et une localisation géographique. L'identifiant du point d'accès permet d'identifier le point d'accès de manière unique sur un territoire. Il s'agit par exemple d'une « Cell ID » lorsque le point d'accès est une cellule GSM, un « LCID » dans le cas d'une cellule UMTS, ou un E-CID dans le cas d'une cellule LTE (Long Term Evolution). La localisation géographique concerne le lieu d'implantation du point d'accès mémorisé par exemple sous la forme d'une valeur de latitude et de longitude et éventuellement d'une altitude. Selon un mode particulier de réalisation, un enregistrement de la base de données 106 comprend en outre, pour un point d'accès donné, une configuration radio du point d'accès. Une telle configuration correspond par exemple à une puissance d'émission du signal radio, et/ou une bande de fréquence utilisée par le point d'accès. La base de données 106 comprend en particulier des enregistrements relatifs aux points d'accès 104 et 304 de la figures 1.

Ainsi, le serveur 110 peut interroger la base de données 106 pour obtenir, à partir d'un identifiant du point d'accès 104, la position géographique et de façon optionnelle la configuration radio de ce point d'accès.

La base de données 107 comprend des informations topographiques géolocalisées concernant un territoire. De telles informations topographiques concernent aussi bien des reliefs que des bâtiments. Un enregistrement de la base de données 107 comporte au moins, pour un élément topographique, la position géographique de l'élément, ses dimensions au sol, et sa hauteur. Dans une réalisation particulière, un enregistrement d'un élément topographique comprend, ou permet d'obtenir, un modèle en trois dimensions, une position géographique, et une donnée représentative de la nature physique de cet élément, comme une valeur booléenne indiquant s'il s'agit d'un relief ou d'un bâtiment.

La base de données 107 comprend en particulier des informations concernant les bâtiments 102,103, 302 et 303 représentés sur la figure 1.

Ainsi, le serveur 110 peut interroger la base de données 107 en vue d'obtenir la description d'un ensemble d'éléments topographiques autour d'une position géographique donnée. Par exemple, le serveur 110 peut obtenir, à partir des coordonnées géographiques du point d'accès 104 et/ou du véhicule 100, la localisation géographique et une représentation en trois dimensions des bâtiments 102 et 103 et, à partir de la localisation du point d'accès 304 ou d'une localisation cible 305 sur la voie de circulation 301, la localisation géographique et une représentation en trois dimensions des bâtiments 302 et 303.

La base de données 108 est une base de données cartographique du réseau routier sur un territoire, comprenant notamment les caractéristiques des voies de circulation 101 et 301. De manière classique, une telle base de données permet d'obtenir une représentation d'un réseau routier autour d'une position géographique donnée. Toutefois, dans une réalisation particulière, une telle base de données n'est pas indispensable à la mise en oeuvre de l'invention.

Bien entendu, les informations contenues dans les bases de données 106, 107 et 108 peuvent être enregistrées dans une unique base de données, par exemple sous la forme d'une carte enrichie, ou au contraire réparties dans une pluralité tables ou de bases de données, sans pour autant modifier l'objet de la présente invention.

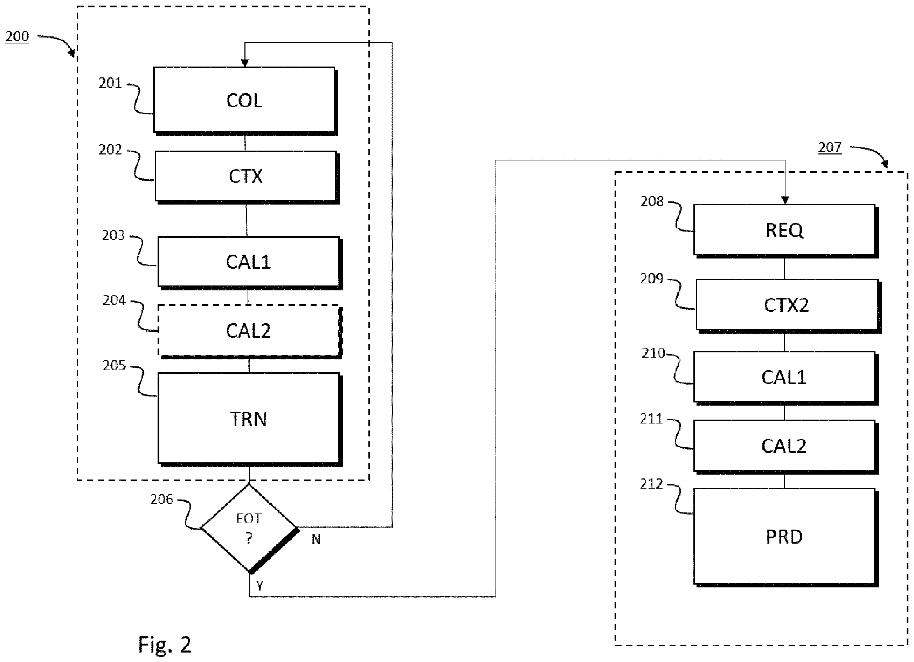

Le procédé de prédiction d'une qualité de connexion à un réseau cellulaire va maintenant être exposé en relation avec les figures 1 et 2.

Le procédé de prédiction selon l'invention comprend une première phase 200 consistant à entrainer un modèle de prédiction à partir de données participatives obtenues à partir d'un ensemble de véhicules d'entrainements.

Au sens de la présente description, un véhicule d'entrainement est un véhicule adapté pour collecter, pour une localisation donnée sur un réseau routier, un identifiant d'un point d'accès à un réseau cellulaire auquel le véhicule est connecté ainsi qu'une donnée représentative d'une qualité de connexion à ce point d'accès. Un véhicule d'entrainement est en outre adapté pour transmettre ces données à un dispositif de traitement de données comme le serveur 110. Pour cela, le véhicule d'entrainement 100 est équipé d'un système de géolocalisation de type GNSS, par exemple un GPS, lui permettant d'obtenir à tout instant sa localisation géographique, et d'une interface de communication sans fil adaptée pour établir une connexion à un réseau de communication par l'intermédiaire d'un réseau d'accès cellulaire GSM, 2G, 3G, 4G ou encore un réseau Wifi ou Wimax. Le système de géolocalisation peut également être un système de de positionnement relatif, adapté pour fournir une position du véhicule par rapport à une position de référence, par exemple par rapport à la position d'un point d'accès auquel est connecté le véhicule. L'interface de communication permet en outre au véhicule d'obtenir un identifiant d'un point d'accès auquel il est connecté, par exemple un identifiant de cellule d'un réseau cellulaire, ainsi qu'une donnée représentative d'une qualité de la connexion à un point d'accès. Une telle donnée représentative d'une qualité de connexion est par exemple un débit montant et/ou descendant, une puissance du signal reçu, un taux de perte de paquet lors d'un échange de données avec un serveur, une valeur de gigue ou de latence. Selon une réalisation particulière, la donnée représentative d'une qualité de connexion est obtenue par analyse d'une transmission de données entre le véhicule et un serveur, en observant par exemple un taux de perte de paquets, une latence ou un débit de transmission.

Le véhicule d'entrainement peut ainsi obtenir et mémoriser un certain nombre d'enregistrements comprenant une localisation géographique, un identifiant de point d'accès et une valeur de qualité de connexion en vue de les transmettre au serveur 110.

L'interface de communications et le système de localisation du véhicule d'entrainement peuvent faire partie intégrante du véhicule, ou bien correspondre à un terminal mobile, par exemple une tablette ou smartphone, embarqué dans le véhicule. Dans un tel cas, la collecte et la transmission des enregistrement vers un serveur sont par exemple mis en oeuvre par une application téléchargeable sur le terminal.

Le véhicule peut transmettre les enregistrements mémorisés au moyen d'une connexion à un réseau d'accès cellulaire où à un réseau WiFi. En variante, les enregistrements peuvent être mémorisés sur un support de stockage amovible, comme une mémoire flash USB (Universal Serial Bus en anglais), pour être ultérieurement transmis au serveur à partir d'un ordinateur personnel par exemple.

Un tel véhicule d'entrainement peut être un véhicule dédié ou un véhicule personnel d'un particulier, tel qu'un vélo, une moto, une voiture, etc. Il peut aussi s'agir d'un véhicule professionnel ou de transport en commun, ou même un train circulant sur un réseau ferré.

Ainsi, lors d'une première étape 201, le serveur 110 obtient au moins un enregistrement en provenance d'un véhicule d'entrainement. On note que l'enregistrement peut être directement reçu en provenance d'un véhicule d'entrainement, ou bien obtenu à partir d'une base de données dans laquelle sont stockées des données envoyées au préalable par les véhicules d'entrainement en vue de leur traitement. Comme exposé ci-avant, un tel enregistrement contient au moins une information de localisation géographique, comme une latitude et une longitude, un identifiant de point d'accès auquel le véhicule était connecté lorsqu'il était à ladite position géographique, ainsi qu'une donnée représentative d'une qualité de connexion constatée à ladite position géographique.

Lors d'une étape 202, le serveur 110 interroge la base de données 106 pour obtenir des informations complémentaires concernant le point d'accès identifié dans l'enregistrement. L'interrogation de la base de données 106 peut se faire via une requête SQL (Structured Query Language en anglais) configurée pour retourner au moins une localisation géographique d'un point d'accès à partir d'un identifiant de point d'accès cellulaire. De façon optionnelle, la requête peut également retourner une hauteur du point d'accès par rapport au sol et une orientation de l'antenne. Selon une réalisation particulière, la requête est en outre configurée pour retourner une configuration radio comportant une puissance d'émission du signal radio et/ou une bande de fréquence utilisée par le point d'accès.

Le serveur 110 interroge également la base de données 107 afin d'obtenir des informations topographiques concernant la zone d'implantation du point d'accès cellulaire identifié dans la donnée d'entrainement considérée. Pour cela, le serveur effectue une requête SQL configurée de manière à obtenir au moins un élément topographique à partir de l'information de localisation du point d'accès cellulaire obtenue auprès de la base de données 106. En variante, la requête peut être configurée de manière à obtenir au moins un élément topographique à partir de l'information de localisation géographique du véhicule d'entrainement. Selon une autre variante, le serveur 110 peut déterminer une zone d'intérêt autour du point d'accès identifié, et interroger le serveur 107 à l'aide d'une requête configurée pour demander les éléments topographiques se trouvant dans cette zone d'intérêt. Une telle zone d'intérêt est par exemple une zone circulaire définie par un rayon autour de la localisation du point d'accès, le rayon étant par exemple déterminé selon une configuration radio de l'antenne, et/ou une distance séparant le point d'accès du véhicule d'entrainement.

Ainsi, à partir des informations issues des bases de données 106 et 107, le serveur 110 obtient une configuration topographique caractéristique de l'environnement du point d'accès et du véhicule d'entrainement. Cette configuration topographique particulière influence la propagation du signal entre le point d'accès et le véhicule, et donc la qualité de connexion du véhicule au point d'accès.

Lors d'une étape 203, le serveur détermine un vecteur de caractéristiques à partir des données obtenues lors de l'étape 202 auprès des bases de données 106 et 107.

Selon un mode de réalisation particulier, la détermination d'un vecteur de caractéristiques comprend le calcul d'une longueur D1 d'un trajet rectiligne de propagation d'un signal depuis un point d'accès identifié jusqu'à une localisation donnée, le signal étant transmis au travers d'un premier élément topographique. Ainsi, le vecteur de caractéristiques déterminé pour une localisation du véhicule 100 et un point d'accès 104 auquel il est connecté comprend au moins la distance D1 en ligne droite séparant le point d'accès 104 du véhicule d'entrainement 100 au moment de l'enregistrement de la donnée d'entrainement. Le serveur 110 peut calculer cette distance par une technique classique de calcul de distance entre deux coordonnées géographiques, les deux coordonnées géographiques étant d'une part la localisation du point d'accès obtenue auprès de la base de données 106 et d'autre part la localisation du véhicule d'entrainement compris dans l'enregistrement en question.

Selon une réalisation particulière, un vecteur de caractéristiques comprend en outre au moins une caractéristique d'un élément topographique faisant obstacle à la propagation directe du signal depuis le point d'accès jusqu'au véhicule d'entrainement. Par exemple, le vecteur comprend l'épaisseur et la nature d'un élément topographique.

Ainsi le vecteur de caractéristiques déterminé pour une localisation du véhicule 100 et un point d'accès 104 auquel il est connecté comprend au moins l'épaisseur W1 du bâtiment 102 faisant obstacle à la propagation directe du signal entre le point d'accès 104 et le véhicule 100, ainsi que sa nature. La nature de l'obstacle peut être obtenu via la base de données 107 et consister par exemple en une indication numérique selon laquelle l'obstacle est un bâtiment, de la végétation ou encore un relief. La nature de l'obstacle peut également correspondre à un matériau de construction lorsque l'obstacle est un bâtiment.

Pour déterminer ces caractéristiques, le serveur 110 peut construire un modèle en trois dimensions d'une zone d'intérêt autour du point d'accès. Le modèle comprend le point d'accès, les éléments topographiques déterminés et le véhicule d'entrainement. Le serveur 110 met en oeuvre une technique de lancer de rayon (Ray-tracing en anglais) pour déterminer la présence d'un élément topographique faisant obstacle à la propagation directe d'un signal entre l'émetteur du point d'accès et la position véhicule d'entrainement. Une telle technique permet d'une part d'identifier un élément topographique, comme le bâtiment 102 de la figure 1, situé sur le trajet de propagation directe du signal, mais aussi de déterminer l'épaisseur W1 de l'obstacle traversé par le signal. En outre, les processeurs graphiques modernes comprennent des circuits dédiés pour effectuer de tels lancés de rayon. Une telle technique peut ainsi être facilement mise en oeuvre par le serveur 110.

Selon un mode de réalisation particulier, un vecteur de caractéristiques comprend en outre, pour une localisation donnée et un point d'accès identifié, une longueur D2 d'un trajet de propagation réfléchi d'un signal depuis le point d'accès identifié jusqu'à la localisation donnée, le signal étant réfléchi sur un second élément topographique 103, et un angle A2 de réflexion du signal sur le second élément topographique 103.

Ainsi, lors d'une étape 204, le serveur 110 détermine une distance D2 composée d'une première distance D21 entre l'antenne du point d'accès 104 et un élément topographique 103 provoquant une réflexion d'un signal radioélectrique émis par le point d'accès selon un angle A2, et une seconde distance D22 entre l'élément topographique 103 et la localisation du véhicule d'entrainement 100. Les valeurs D2 et A2 sont déterminées par le serveur selon une technique de lancer de rayon dans l'environnement modélisé en trois dimensions décrit précédemment. Les caractéristiques D2 et A2 ainsi déterminées sont ajoutées au vecteur de caractéristiques.

Selon une réalisation particulière, un vecteur de caractéristiques comprend en outre une valeur représentative d'un taux d'humidité dans l'air. Cette valeur peut correspondre à une valeur moyenne constatée dans une région et être obtenue via le réseau de communication 109 auprès d'un serveur de données météorologiques, ou à partir d'une mesure relevée par un capteur du véhicule d'entrainement et transmise au serveur lors de l'étape de collecte des données participatives 201.

Selon une réalisation particulière, un vecteur de caractéristiques comprend en outre au moins une donnée de configuration radio du point d'accès. Ainsi, le vecteur de caractéristiques déterminé par le serveur 110 peut comprendre une valeur représentative de la puissance d'émission radio du point d'accès et/ou d'une bande de fréquence utilisée par le point d'accès, obtenue auprès de la base de données 106.

A ce stade, le vecteur de caractéristiques déterminé comprend un ensemble ordonné de valeurs numériques réelles, éventuellement mises à l'échelle selon des techniques de traitements statistiques classiques.

Le procédé comprend une étape 205 au cours de laquelle le modèle de prédiction est entrainé à partir d'une part du vecteur de caractéristiques déterminé aux étapes 203 et 204 et d'autre part la donnée représentative de la qualité de connexion obtenue à l'étape 201. Pour cela, l'étape 205 consiste à soumettre en entrée du modèle de prédiction le vecteur de caractéristiques déterminé selon les étapes 203 et 204, auquel est ajoutée la donnée représentative de la qualité de connexion obtenue à l'étape 201. Il s'agit d'un apprentissage supervisé dont l'exemple est la donnée représentative de la qualité de connexion obtenue.

Un grand nombre d'enregistrements peut s'avérer nécessaire pour entrainer correctement le modèle. Ainsi, la phase d'entrainement est répétée pour une pluralité de localisations et une pluralité de véhicules d'entrainements, afin de déterminer une pluralité de vecteurs de caractéristiques à partir desquels l'étape de d'entrainement est répétée tant que le modèle n'est pas suffisamment entrainé.

La phase d'entrainement peut enfin comprendre une étape 206 de détermination de fin d'entrainement. Selon une réalisation particulière, le modèle est considéré entrainé lorsqu'un nombre prédéterminé d'enregistrements et/ou de localisations a été traité.

De préférence, l'entrainement est réalisé à partir de données participatives collectées pour un ensemble de points d'accès qui sont représentatifs des points d'accès d'un territoire. Par exemple, l'entrainement est effectué à partir de données relatives à des points d'accès situés en environnement urbain et des points d'accès situés en environnement rural, et pour des points d'accès configurés pour utiliser différentes bandes de fréquences. De cette façon, le modèle entrainé est adapté pour fournir des prédictions plus fiables lorsqu'il est appliqué à des données en provenance de points d'accès de configuration géographique et/ou radio semblables. Ainsi, selon une réalisation particulière, l'entrainement est considéré terminé lorsque les données d'entrainement soumises au modèle sont suffisamment représentatives des configurations possibles sur un territoire, en termes de topologie, de configuration radio des points d'accès, de distances etc.

Selon un mode particulier de réalisation, la phase d'entrainement débute à un instant T pour une certaine durée, par exemple une semaine. Durant cette période, les données en provenance d'une pluralité de véhicules d'entrainement pour une pluralité de localisations sont collectées et utilisées pour entrainer le modèle de prédiction. La phase d'entrainement prend alors fin lorsque la période d'entrainement expire. En variante, la phase d'entrainement 200 est réitérée périodiquement, par exemple tous les soirs, après que de nouvelles données aient été collectées, afin de mettre à jour le modèle.

Lorsque le serveur 110 détermine, à l'étape 206, que le modèle de prédiction est entrainé, il met en oeuvre une phase de prédiction 207.

Pour cela, le serveur obtient à l'étape 208 une localisation géographique cible et un identifiant de point d'accès particulier pour lesquels une prédiction de qualité de connexion est demandée. Le serveur 110 peut obtenir une localisation géographique cibles à partir d'une cartographie du réseau routier obtenue à partir de la base de données 108 ou d'une requête transmise par un dispositif.

En référence à la figure 1, la localisation cible correspond par exemple à une localisation géographique 305 sur un axe routier 301 pour laquelle on souhaite obtenir une prévision de qualité de connexion à un réseau cellulaire. A partir de la localisation géographique cible 305, le serveur 110 détermine un point d'accès 304 auquel un véhicule sera connecté en étant localisé à la position 305. Pour cela, le serveur 110 peut par exemple utiliser la base de données 106 pour identifier le point d'accès le plus proche de la localisation 305. Bien entendu, tout autre moyen de détermination d'un point d'accès cellulaire pour la connexion d'un terminal à partir d'un emplacement donné peut être mis en oeuvre.

Lors des étapes 209, 210 et 211, le serveur 110 met en oeuvre des mécanismes similaires à ceux respectivement mis en oeuvre lors des étapes 202, 203 et 204 décrites ci-avant pour déterminer un vecteur de caractéristiques à partir d'une localisation et d'un identifiant de point d'accès. Autrement dit, le serveur obtient des informations auprès des bases de données 106 et 107 afin de construire un modèle en trois dimensions d'une zone d'intérêt autour du point d'accès 304 et de la localisation cible 305 et utilise une technique de lancer de rayon pour déterminer un vecteur de caractéristiques. Le type, l'ordre et le nombre de valeurs du vecteur de caractéristiques déterminé lors de la phase de prédiction est identiques au type, à l'ordre et au nombre de valeurs du vecteur de caractéristiques déterminé pour la phase d'entrainement du modèle de prédiction.

Lors d'une étape 212, le serveur 110 applique le vecteur de caractéristiques déterminé pour la localisation cible 305 et le point d'accès 304 au modèle de prédiction entrainé pour obtenir une valeur représentative de la qualité de connexion depuis la localisation cible.

Selon une réalisation particulière, des localisations cibles sont déterminées à partir d'une carte routière. Par exemple, le serveur peut obtenir une carte d'un réseau routier à partir de la base de données 108 et mettre en oeuvre le procédé de prédiction pour déterminer une qualité de connexion à différents emplacements sur les différents tronçons du réseau routier. De cette façon, il est possible d'obtenir une carte enrichie d'un réseau routier associant des qualités de connexion prédites à des emplacements sur des tronçons routiers. Une telle carte permet par exemple à un véhicule connecté d'anticiper le téléchargement de données volumineuses lorsqu'une mauvaise connexion est prédite sur une partie à venir d'un parcours.

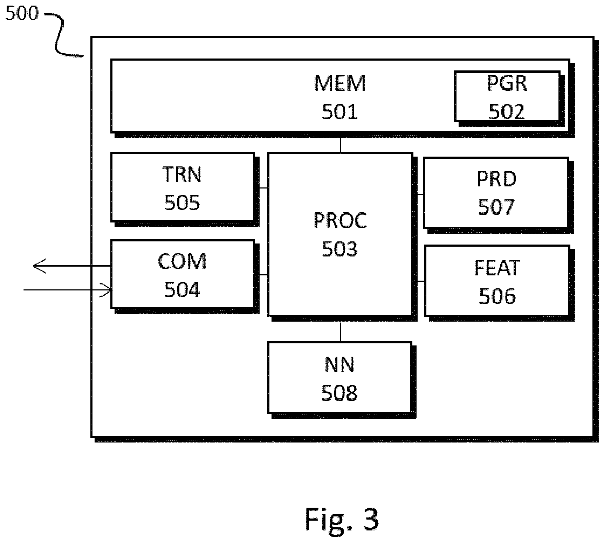

Selon un mode de réalisation particulier, le procédé de prédiction est mis en oeuvre par un dispositif de prédiction. L'architecture d'un tel dispositif est représentée schématiquement sur la figure 3.

La figure 3 représente un dispositif 500 adapté pour mettre en oeuvre le procédé de prédiction selon un mode de réalisation particulier.

Le dispositif comprend un espace de stockage 501, par exemple une mémoire MEM, une unité de traitement 503 équipée par exemple d'un processeur PROC. L'unité de traitement peut être piloté par un programme 502, par exemple un programme d'ordinateur PGR, mettant en oeuvre le procédé de prédiction décrit en référence aux figures 1 et 2, et notamment les étapes de réception, en provenance d'au moins un véhicule d'entrainement connecté à un point d'accès particulier, d'une donnée de localisation du véhicule d'entrainement, d'un identifiant du point d'accès auquel le véhicule d'entrainement est connecté, et d'une valeur représentative d'une qualité de la connexion du véhicule d'entrainement audit point d'accès, de détermination d'une caractéristique de propagation d'un signal radio entre la localisation reçue et le point d'accès identifié, d'entrainement du modèle de prédiction à partir de la caractéristique de propagation déterminée associée à la valeur représentative d'une qualité de la connexion reçue, ainsi que les étapes d'identification d'un point d'accès cellulaire cible accessible depuis la localisation cible, d'une seconde caractéristique de propagation d'un signal radio entre la localisation cible et le point d'accès cible identifié, et de prédiction d'une valeur représentative d'une qualité de connexion au point d'accès cellulaire cible depuis la localisation cible par application du modèle à la seconde caractéristique de propagation.

A l'initialisation, les instructions du programme d'ordinateur 502 sont par exemple chargées dans une mémoire RAM (Random Access Memory) avant d'être exécutées par le processeur de l'unité de traitement 503. Le processeur de l'unité de traitement 503 met en oeuvre les étapes du procédé de prédiction selon les instructions du programme d'ordinateur 502.

Pour cela, le dispositif 500 comprend, outre la mémoire 501, des moyens de communication 504 (COM) permettant au dispositif de se connecter à un réseau de communication et d'échanger des données avec d'autres dispositifs par l'intermédiaire du réseau de télécommunications, et en particulier de recevoir, en provenance d'au moins un véhicule d'entrainement connecté à un point d'accès particulier, une donnée de localisation du véhicule d'entrainement, un identifiant du point d'accès auquel le véhicule d'entrainement est connecté, et une valeur représentative d'une qualité de la connexion du véhicule d'entrainement audit point d'accès. Les moyens de communication sont par exemple une interface réseau sans fil, de type GSM, EDGE, 2G, 3G, 4G, Wifi, WIMAX, etc. et permettent d'échanger des messages conformément au protocole de communication TCP/IP.

Le dispositif comprend aussi un modèle de prédiction 508 adapté pour être entrainé à partir d'un premier jeu de caractéristiques afin de prédire une valeur à partir d'un second jeu de caractéristiques. Un tel modèle de prédiction est par exemple un réseau de neurones NN de type perceptron multicouche. Le modèle de prédiction 508 est par exemple mis en oeuvre par des instructions de programme d'ordinateur chargées dans la mémoire 501 du dispositif et exécutées par l'unité de traitement 503.

Le dispositif comprend également un module d'extraction de caractéristiques 506 adapté pour déterminer au moins une caractéristique de propagation d'un signal radio entre une localisation géographique et un point d'accès identifié. En particulier, le module d'extraction 506 est adapté pour déterminer au moins une caractéristique de propagation d'un signal radio entre une localisation géographique et un point d'accès identifié reçus par le module de communication 504 en provenance d'un véhicule d'entrainement, et au moins une caractéristique de propagation d'un signal radio entre une localisation géographique cible et un point d'accès cible identifié. Le module 506 peut être mis en oeuvre par des instructions de programme d'ordinateur configurées pour, lorsqu'elles sont exécutées par le processeur 503, obtenir à partir d'une base de données la position d'un point d'accès à partir d'un identifiant dudit point d'accès, et pour mettre en oeuvre une technique de lancer de rayon dans un modèle en trois dimensions de l'environnement du point d'accès pour déterminer :
- Une longueur d'un trajet rectiligne de propagation d'un signal depuis un point d'accès identifié jusqu'à une localisation, le signal étant transmis au travers d'un premier élément topographique, et
- Au moins une caractéristique du premier élément topographique.

Et, selon une réalisation particulière pour déterminer :
- Une longueur d'un trajet de propagation réfléchi d'un signal depuis un point d'accès identifié jusqu'à une localisation donnée, le signal étant réfléchi sur un second élément topographique, et
- Un angle de réflexion du signal sur le second élément topographique.

Le dispositif 500 comprend aussi un module d'entrainement 505 du modèle de prédiction 507. Le module d'entrainement 505 est par exemple mis en oeuvre par un processeur piloté par des instructions, les instructions étant configurées pour obtenir auprès du module d'extraction 506, au moins une caractéristique de propagation d'un signal radio entre une localisation géographique et un point d'accès identifié reçus par le module de communication 504, obtenir une valeur représentative d'une qualité de connexion depuis la localisation géographique, et soumettre en entrée du modèle prédictif 508 la caractéristique de propagation d'un signal radio obtenue en association avec ladite valeur représentative d'une qualité de connexion.

Le dispositif 500 comprend enfin un module de prédiction 507 mis en oeuvre par un processeur piloté par des instructions. Ces instructions sont configurées pour obtenir auprès du module d'extraction 506, au moins une caractéristique de propagation d'un signal radio entre une localisation géographique cible et un point d'accès cible identifié, pour soumettre la caractéristique de propagation obtenue en entrée du modèle de prédiction 508 afin d'obtenir, par application du modèle entrainé à la caractéristique de propagation déterminée, une prédiction de qualité de connexion pour la localisation cible.

Selon un mode particulier de réalisation, le dispositif met à jour, via une requête SQL adaptée transmise par le module de communication 504, une base de données cartographique en associant la qualité prédite à une localisation géographique sur la carte.

Selon une réalisation particulière, le dispositif est intégré dans un serveur.

## Revendications

1. Procédé de prédiction d'une valeur représentative d'une qualité de connexion d'un véhicule à un réseau cellulaire depuis une localisation cible sur un réseau routier, le procédé comprenant :
- Une phase d'entrainement (200) d'un modèle de prédiction comprenant les étapes suivantes :
o Réception (201), en provenance d'au moins un véhicule d'entrainement connecté à un point d'accès particulier, d'une donnée de localisation du véhicule d'entrainement, d'un identifiant du point d'accès auquel le véhicule d'entrainement est connecté, et d'une valeur représentative d'une qualité de la connexion du véhicule d'entrainement audit point d'accès,
o Détermination (202, 203, 204) d'une caractéristique de propagation d'un signal radio entre la localisation reçue et le point d'accès identifié comprenant au moins une longueur (D1) d'un trajet rectiligne de propagation du signal depuis le point d'accès identifié jusqu'à la localisation reçue, le signal étant transmis au travers d'un premier élément topographique (102), et au moins une caractéristique (W1) du premier élément topographique (102),
o Entrainement (205) du modèle de prédiction à partir de la caractéristique de propagation déterminée associée à la valeur représentative d'une qualité de la connexion reçue ; et
- Une phase de prédiction (207) d'une seconde valeur représentative d'une qualité de connexion à un réseau cellulaire à la localisation cible sur un réseau routier, comprenant les étapes suivantes :
o Identification (208) d'un point d'accès cellulaire cible accessible depuis la localisation cible,
o Détermination (209, 210, 211), d'une seconde caractéristique de propagation d'un signal radio entre la localisation cible et le point d'accès cible identifié comprenant au moins une longueur (D1) d'un trajet rectiligne de propagation du signal depuis le point d'accès identifié jusqu'à la localisation cible, le signal étant transmis au travers d'un premier élément topographique (102), et au moins une caractéristique (W1) du premier élément topographique (102),
o Prédiction (212) d'une valeur représentative d'une qualité de connexion au point d'accès cellulaire cible depuis la localisation cible par application du modèle à la seconde caractéristique de propagation.

2. Procédé selon la revendication 1 dans lequel un vecteur de caractéristiques déterminé pour une localisation donnée et un point d'accès identifié comprend :
- Une longueur (D2) d'un trajet de propagation réfléchi d'un signal depuis le point d'accès jusqu'à la localisation donnée, le signal étant réfléchi sur un second élément topographique, et
- Un angle (A2) de réflexion du signal sur le second élément topographique.

3. Procédé selon la revendication 2 dans lequel le vecteur de caractéristiques déterminé pour une localisation donnée et un point d'accès identifié comprend en outre une donnée représentative (N2) de la nature physique du second élément topographique.

4. Procédé selon l'une quelconque des revendications 1 à 3 dans lequel un vecteur de caractéristiques déterminé pour une localisation donnée et un point d'accès identifié comprend en outre une configuration radio du point d'accès identifié.

5. Procédé selon l'une quelconque des revendications 1 à 4 dans lequel un vecteur de caractéristiques déterminé pour une localisation donnée et un point d'accès identifié comprend en outre une valeur représentative de l'humidité dans l'air.

6. Dispositif de prédiction d'une valeur représentative d'une qualité de connexion d'un véhicule à un réseau cellulaire depuis une localisation cible, le dispositif comprenant une mémoire (501) dans laquelle sont stockées des instructions (502), un module de communication (504) et un calculateur (503) adapté pour mettre en oeuvre, lorsqu'il est configuré par les instructions :
- Une phase d'entrainement d'un modèle de prédiction (507) comprenant les étapes suivantes :
o Réception, par le module de communication (504) en provenance d'au moins un véhicule d'entrainement connecté à un point d'accès particulier, d'une donnée de localisation du véhicule d'entrainement, d'un identifiant du point d'accès auquel le véhicule d'entrainement est connecté, et d'une valeur représentative d'une qualité de la connexion du véhicule d'entrainement audit point d'accès,
∘ Détermination, par un module d'extraction de caractéristiques (506), d'une caractéristique de propagation d'un signal radio entre la localisation reçue et le point d'accès identifié comprenant au moins une longueur (D1) d'un trajet rectiligne de propagation du signal depuis le point d'accès identifié jusqu'à la localisation reçue, le signal étant transmis au travers d'un premier élément topographique (102), et au moins une caractéristique (W1) du premier élément topographique (102),
∘ Entrainement du modèle de prédiction (507) à partir de la caractéristique de propagation déterminée associée à la valeur représentative d'une qualité de la connexion reçue ; et
- Une phase de prédiction d'une seconde valeur représentative d'une qualité de connexion à un réseau cellulaire à la localisation cible sur un réseau routier, comprenant les étapes suivantes :
∘ Identification d'un point d'accès cellulaire cible accessible depuis la localisation cible,
∘ Détermination, par le module d'extraction de caractéristiques (506), d'une seconde caractéristique de propagation d'un signal radio entre la localisation cible et le point d'accès cible identifié comprenant au moins une longueur (D1) d'un trajet rectiligne de propagation du signal depuis le point d'accès identifié jusqu'à la localisation cible, le signal étant transmis au travers d'un premier élément topographique (102), et au moins une caractéristique (W1) du premier élément topographique (102),
∘ Prédiction d'une valeur représentative d'une qualité de connexion au point d'accès cellulaire cible depuis la localisation cible par application du modèle de prédiction (507) à la seconde caractéristique de propagation.

7. Serveur comprenant un dispositif de prédiction d'une qualité de connexion selon la revendication 6.

8. Support d'information comportant des instructions de programme d'ordinateur configurées pour mettre en oeuvre les étapes d'un procédé de prédiction selon l'une quelconque des revendication 1 à 5 lorsque les instructions sont exécutées par un processeur.

## Patentansprüche

1. Verfahren zur Vorhersage eines für eine Verbindungsqualität eines Fahrzeugs mit einem zellularen Netzwerk ausgehend von einem Zielstandort auf einem Straßennetz repräsentativen Werts, wobei das Verfahren enthält:
- eine Trainingsphase (200) eines Vorhersagemodells, die die folgenden Schritte enthält:
∘ Empfang (201), ausgehend von mindestens einem Trainingsfahrzeug, das mit einem einzelnen Zugangspunkt verbunden ist, eines Standortdatenwerts des Trainingsfahrzeugs, einer Kennung des Zugangspunkts, mit dem das Trainingsfahrzeug verbunden ist, und eines für eine Qualität der Verbindung des Trainingsfahrzeugs mit dem Zugangspunkt repräsentativen Werts,
∘ Bestimmung (202, 203, 204) eines Ausbreitungsmerkmals eines Funksignals zwischen dem empfangenen Standort und dem identifizierten Zugangspunkt, das mindestens eine Länge (D1) einer geradlinigen Ausbreitungsstrecke des Signals vom identifizierten Zugangspunkt bis zum empfangenen Standort, wobei das Signal durch ein erstes topographisches Element (102) hindurch übertragen wird, und mindestens ein Merkmal (W1) des ersten topographischen Elements (102) enthält,
∘ Training (205) des Vorhersagemodells ausgehend von dem bestimmten Ausbreitungsmerkmal, das dem für eine Qualität der empfangenen Verbindung entsprechenden Wert zugeordnet ist; und
- eine Vorhersagephase (207) eines zweiten für eine Verbindungsqualität mit einem zellularen Netzwerk am Zielstandort auf einem Straßennetz repräsentativen Werts, die die folgenden Schritte enthält:
∘ Identifizierung (208) eines vom Zielstandort aus zugänglichen zellularen Zielzugangspunkts,
∘ Bestimmung (209, 210, 211) eines zweiten Ausbreitungsmerkmals eines Funksignals zwischen dem Zielstandort und dem identifizierten Zielzugangspunkt, das mindestens eine Länge (D1) einer geradlinigen Ausbreitungsstrecke des Signals vom identifizierten Zugangspunkt bis zum Zielstandort, wobei das Signal durch ein erstes topographisches Element (102) hindurch übertragen wird, und mindestens ein Merkmal (W1) des ersten topographischen Elements (102) enthält,
∘ Vorhersage (212) eines für eine Verbindungsqualität mit dem zellularen Zielzugangspunkt ausgehend vom Zielstandort repräsentativen Werts durch Anwendung des Modells auf das zweite Ausbreitungsmerkmal.

2. Verfahren nach Anspruch 1, wobei ein bestimmter Merkmalsvektor für einen gegebenen Standort und einen identifizierten Zugangspunkt enthält:
- eine Länge (D2) einer reflektierten Ausbreitungsstrecke eines Signals vom Zugangspunkt bis zum gegebenen Standort, wobei das Signal auf einem zweiten topographischen Element reflektiert wird, und
- einen Reflexionswinkel (A2) des Signals auf dem zweiten topographischen Element.

3. Verfahren nach Anspruch 2, wobei der bestimmte Merkmalsvektor für einen gegebenen Standort und einen identifizierten Zugangspunkt außerdem einen für die physikalische Beschaffenheit des zweiten topographischen Elements repräsentativen Datenwert (N2) enthält.

4. Verfahren nach einem der Ansprüche 1 bis 3, wobei ein bestimmter Merkmalsvektor für einen gegebenen Standort und einen identifizierten Zugangspunkt außerdem eine Funkkonfiguration des identifizierten Zugangspunkts enthält.

5. Verfahren nach einem der Ansprüche 1 bis 4, wobei ein bestimmter Merkmalsvektor für einen gegebenen Standort und einen identifizierten Zugangspunkt außerdem einen für die Luftfeuchtigkeit repräsentativen Wert enthält.

6. Vorrichtung zur Vorhersage eines für eine Verbindungsqualität eines Fahrzeugs mit einem zellularen Netz ausgehend von einem Zielstandort repräsentativen Werts, wobei die Vorrichtung einen Speicher (501), in dem Anweisungen (502) gespeichert sind, ein Kommunikationsmodul (504) und einen Rechner (503) enthält, der geeignet ist, wenn er durch die Anweisungen konfiguriert ist, durchzuführen:
- eine Trainingsphase eines Vorhersagemodells (507), die die folgenden Schritte enthält:
∘ Empfang, durch das Kommunikationsmodul (504), ausgehend von mindestens einem mit einem einzelnen Zugangspunkt verbundenen Trainingsfahrzeug, eines Standortdatenwerts des Trainingsfahrzeugs, einer Kennung des Zugangspunkts, mit dem das Trainingsfahrzeug verbunden ist, und eines für eine Qualität der Verbindung des Trainingsfahrzeugs mit dem Zugangspunkt repräsentativen Werts,
∘ Bestimmung, durch ein Merkmalsentnahmemodul (506), eines Ausbreitungsmerkmals eines Funksignals zwischen dem empfangenen Standort und dem identifizierten Zugangspunkt, das mindestens eine Länge (D1) einer geradlinigen Ausbreitungsstrecke des Signals vom identifizierten Zugangspunkt bis zum empfangenen Standort, wobei das Signal durch ein erstes topographisches Element (102) hindurch übertragen wird, und mindestens ein Merkmal (W1) des ersten topographischen Elements (102) enthält,
∘ Training des Vorhersagemodells (507) ausgehend von dem bestimmten Ausbreitungsmerkmal, das dem für eine Qualität der empfangenen Verbindung entsprechenden Wert zugeordnet ist; und
- eine Vorhersagephase eines zweiten für eine Verbindungsqualität mit einem zellularen Netzwerk am Zielstandort auf einem Straßennetz repräsentativen Werts, die die folgenden Schritte enthält:
∘ Identifizierung eines zellularen Zielzugangspunkts, der vom Zielstandort aus zugänglich ist,
∘ Bestimmung durch das Merkmalsentnahmemodul (506) eines zweiten Ausbreitungsmerkmals eines Funksignals zwischen dem Zielstandort und dem identifizierten Zielzugangspunkt, das mindestens eine Länge (D1) einer geradlinigen Ausbreitungsstrecke des Signals vom identifizierten Zugangspunkt bis zum Zielstandort, wobei das Signal durch ein erstes topographisches Element (102) hindurch übertragen wird, und mindestens ein Merkmal (W1) des ersten topographischen Elements (102) enthält,
∘ Vorhersage eines für eine Verbindungsqualität mit dem zellularen Zielzugangspunkt ausgehend vom Zielstandort repräsentativen Werts durch Anwendung des Vorhersagemodells (507) auf das zweite Ausbreitungsmerkmal.

7. Server, der eine Vorhersagevorrichtung einer Verbindungsqualität nach Anspruch 6 enthält.

8. Informationsträger, der Computerprogrammanweisungen aufweist, die konfiguriert sind, die Schritte eines Vorhersageverfahrens nach einem der Ansprüche 1 bis 5 durchzuführen, wenn die Anweisungen von einem Prozessor ausgeführt werden.

## Claims

1. Method for predicting a value representative of a quality of connection of a vehicle to a cellular network from a target location on a road network, the method comprising:
- a phase (200) of training a prediction model comprising the following steps:
∘ receiving (201), from at least one training vehicle connected to a particular access point, a location datum of the training vehicle, an identifier of the access point to which the training vehicle is connected, and a value representative of a quality of the connection of the training vehicle to said access point,
∘ determining (202, 203, 204) a characteristic of propagation of a radio signal between the received location and the identified access point, comprising at least one length (D1) of a rectilinear propagation path of the signal from the identified access point to the received location, the signal being transmitted through a first topographic element (102), and at least one characteristic (W1) of the first topographic element (102),
∘ training (205) the prediction model on the basis of the determined characteristic of propagation associated with the value representative of a quality of the received connection; and
- a phase (207) of predicting a second value representative of a quality of connection to a cellular network at the target location on a road network, comprising the following steps:
∘ identifying (208) a target cellular access point accessible from the target location,
∘ determining (209, 210, 211) a second characteristic of propagation of a radio signal between the target location and the identified target access point, comprising at least one length (D1) of a rectilinear propagation path of the signal from the identified access point to the target location, the signal being transmitted through a first topographic element (102), and at least one characteristic (W1) of the first topographic element (102),
∘ predicting (212) a value representative of a quality of connection to the target cellular access point from the target location by applying the model to the second characteristic of propagation.

2. Method according to Claim 1, wherein a vector of characteristics that is determined for a given location and an identified access point comprises:
- a length (D2) of a reflected propagation path of a signal from the access point to the given location, the signal being reflected from a second topographic element, and
- an angle (A2) of reflection of the signal from the second topographic element.

3. Method according to Claim 2, wherein the vector of characteristics that is determined for a given location and an identified access point further comprises a datum (N2) representative of the physical nature of the second topographic element.

4. Method according to any one of Claims 1 to 3, wherein a vector of characteristics that is determined for a given location and an identified access point further comprises a radio configuration of the identified access point.

5. Method according to any one of Claims 1 to 4, wherein a vector of characteristics that is determined for a given location and an identified access point further comprises a value representative of the amount of moisture in the air.

6. Device for predicting a value representative of a quality of connection of a vehicle to a cellular network from a target location, the device comprising a memory (501) in which are stored instructions (502), a communication module (504) and a computer (503) suitable for implementing, when it is configured by the instructions:
- a phase of training a prediction model (507) comprising the following steps:
∘ receiving, via the communication module (504), from at least one training vehicle connected to a particular access point, a location datum of the training vehicle, an identifier of the access point to which the training vehicle is connected, and a value representative of a quality of the connection of the training vehicle to said access point,
∘ determining, via a characteristic-extracting module (506), a characteristic of propagation of a radio signal between the received location and the identified access point, comprising at least one length (D1) of a rectilinear propagation path of the signal from the identified access point to the received location, the signal being transmitted through a first topographic element (102), and at least one characteristic (W1) of the first topographic element (102),
∘ training the prediction model (507) on the basis of the determined characteristic of propagation associated with the value representative of a quality of the received connection; and
- a phase of predicting a second value representative of a quality of connection to a cellular network at the target location on a road network, comprising the following steps:
∘ identifying a target cellular access point accessible from the target location,
∘ determining, via the characteristic-extracting module (506), a second characteristic of propagation of a radio signal between the target location and the identified target access point, comprising at least one length (D1) of a rectilinear propagation path of the signal from the identified access point to the target location, the signal being transmitted through a first topographic element (102), and at least one characteristic (W1) of the first topographic element (102),
∘ predicting a value representative of a quality of connection to the target cellular access point from the target location by applying the prediction model (507) to the second characteristic of propagation.

7. Server comprising a device for predicting a quality of connection according to Claim 6.

8. Data medium containing computer-program instructions configured to implement the steps of a predicting method according to any one of Claims 1 to 5, when the instructions are executed by a processor.
